# EUROPEAN PATENT APPLICATION

(11) **EP 1 418 746 A2**
(43) Date of publication of application: **12.05.2004**
(21) Application number: 03078402.9
(22) Date of filing: 30.10.2003
(51) Int. Cl.: H04N 1/32

(54) **Image processing**

(30) Priority: 06.11.2002 GB 0225820
(71) Applicant: EASTMAN KODAK COMPANY, Rochester, New York 14650 (US)
(72) Inventor: Grimsey, Andrew D., c/o Kodak Limited, Harrow, Middlesex HA1 4TY (GB)
(74) Representative: Barker, Brenda

(57) **Abstract**

The invention provides a method of processing customer image orders, comprising the steps of identifying one or more quality features of one or more digital images, printing the one or more digital images thereby creating output format prints and, automatically providing an indicator relating to the one or more quality features with the output format prints.

## Description

### FIELD OF THE INVENTION

The present invention relates to image processing and in particular to an improved method of processing customer image orders. The invention also relates to a photographic processing system and a computer program for controlling the system.

### BACKGROUND OF THE INVENTION

The process of photofinishing relates to the delivery of customer image orders from exposed film. For example, it relates to the delivery of colour photographic prints, from exposed colour negative film supplied by a customer. The term 'photographic prints' incorporates photographs printed on photographic paper and also other forms of output from the photofinishing process. Usually, film supplied by a customer is processed to create a permanent negative image on the film. An important step in the photofinishing process is printing of the negative image. When optical printing is used, light is irradiated onto and through the negative image from where it is incident onto photosensitive paper, thereby forming a latent image on the photosensitive paper. The photosensitive paper is then chemically developed to produce the final customer print or photograph.

A possible later step in the photofinishing process is print inspection. This step comprises an operator checking prints to determine if one or more quality features have affected the image and for example if an image needs to be reprinted. In some photofinishing processes, when a quality feature of an image is recognised, a self-adhesive label is attached to the print. The self-adhesive label may be used to convey information to the customer about the quality feature. If the quality feature relates to some defect, the information may include instructions to a user about how to avoid the defect in future images.

### PROBLEM TO BE SOLVED BY THE INVENTION

A problem with this conventional photofinishing process is that manual operator intervention is required. This has cost, speed and efficiency implications for the photofinishing process. A method of processing customer image orders is required that overcomes these problems.

### SUMMARY OF THE INVENTION

According to a first aspect of the present invention there is provided a method of processing customer image orders, comprising the steps of:
identifying one or more quality features of one or more digital images;
printing the one or more digital images thereby creating output format prints; and, automatically providing e.g. by printing in-line with the output format prints, an indicator relating to the one or more quality features in-line with the output format prints.

In one example, the one or more digital images are obtained by scanning a processed film having one or more images captured thereon prior to the step of identifying the one or more quality features of one or more digital images. In other words, the method comprises the step of scanning a processed film to create the one or more digital images.

Preferably, the indicator is a printed statement to notify a customer as to how the one or more quality features may be improved or avoided in the future.

Optionally, on identification of the one or more quality features, adjustment of the one or more features is automatically applied to the one or more digital images, in which case the indicator is a printed statement to notify a customer that adjustment has occurred. As well as printing an image with the feature adjusted, the image may also be printed without the feature adjusted together with a statement to alert a user to the difference in quality between the adjusted image and the non-adjusted image.

Preferably, the output format prints are printed on photographic material such as light sensitive photographic paper. The prints could also be made on inkjet paper. Other formats for the output prints would also be suitable.

In one example, if it is detected that a quality feature is common to more than one of the images derived from the same film, a single indicator is printed to alert a customer to the fact that the quality feature was present in more than one of the images.

According to a second aspect of the present invention, there is provided a photographic print, comprising an image region having an image printed thereon and a data region, the data region being arranged adjacent to the image region and containing data relating to one or more quality features of the image.

According to a further aspect of the present invention, there is provided a printing system for incorporation into a photographic processing system. The printing system comprises a data source and a printer, the data source being adapted to provide data relating to an image to be printed and data relating to an indicator of a quality feature of the image to the printer.

Preferably, the data source comprises a scanner for scanning processed film and creating a digital image file for providing to the printer. The scanner preferably includes a detection and control system for detecting one or more quality features of images on film that it scans and generating a control signal for coupling to the printer. The control signal will cause the printer to print the image and the indicator of the quality feature of the image. The detection and control system may be implemented by image enhancement software optionally stored on a computer readable medium.

According to a further aspect of the present invention, there is provided a computer program for controlling the operation of a photographic processing system comprising a processor for receiving and processing exposed photographic film and a printing system for printing images from the film. The computer program, when run on a computer associated with the photographic processing system causes the printer to detect any quality features of images on the film and print an indication of the one or more detected quality features adjacent to the corresponding printed image from the film.

### ADVANTAGEOUS EFFECT OF THE INVENTION

The invention provides a method of automatically providing a customer with information relating to quality features of the images. The invention enables the time consuming process of manual inspection of print quality to be avoided, thus providing cost and efficiency savings to the photofinishing process.

In one example of the present invention the indicator is a printed statement to notify a customer as to the likely cause of the one or more quality features.
This enables a customer to understand how the quality feature may be improved or avoided in the future.

### BRIEF DESCRIPTION OF THE DRAWINGS

Examples of the present invention will now be described in detail with reference to the accompanying drawings, in which:
Figure 1 shows a schematic representation of the process by which films are received by photofinishers and printed photographs are returned to customers;
Figure 2 shows a schematic representation of a printing system suitable for use in the processing system of the present invention;
Figure 3 shows a schematic representation of a photographic print according to the present invention; and,
Figures 4 and 5 show examples of photographic prints according to the present invention.

### DETAILED DESCRIPTION OF THE INVENTION

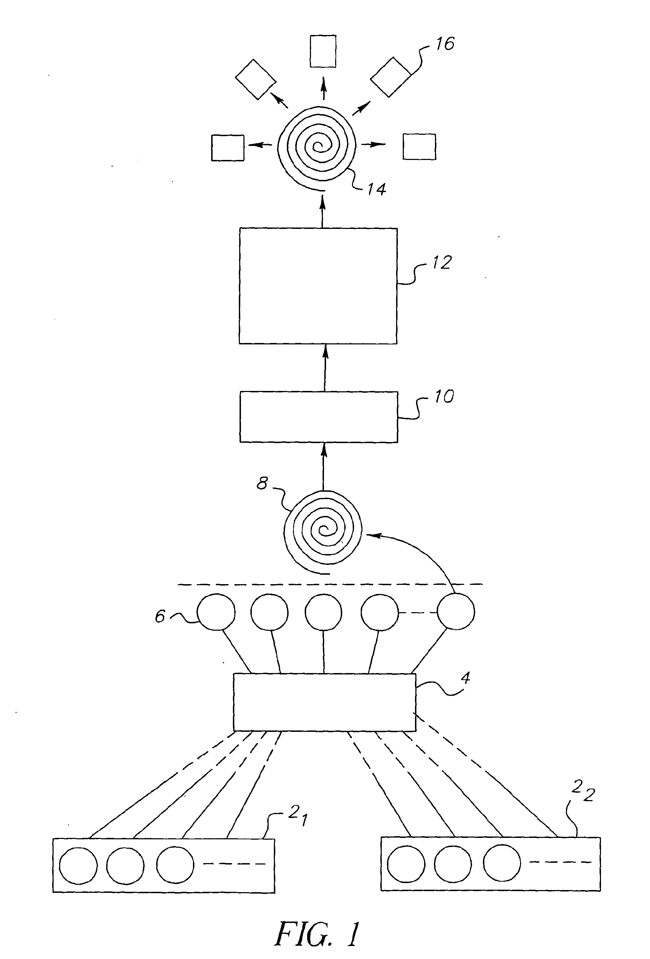

Figure 1 shows a schematic representation of the main steps in a photofinishing process by which films are received by photofinishers and photographs returned to customers, incorporating the method of the present invention. Initially films are deposited at individual shops within dealerships 2₁, 2₂ etc. such as a chain of high street photography shops or high street chemists. The films are then transferred to a photofinishing laboratory 4, which serves to process the film and produce the photographs and any other desired output for the customer, to be returned to the customer as the customer product.

On receipt of the films at the photofinishing laboratory 4, the films may be grouped together in batches 6 to facilitate quick processing and convenient arrangement of the output. For example, one batch may correspond to all films from which one set of standard size prints has been requested. Alternatively, one batch may include all films from which two sets of standard size prints and one photo CD have been requested. Any combination of output formats may be used to define a batch. The films could also be grouped in batches in dependence on the dealer from which they were received i.e. all films from a common dealer may be grouped in a common batch.

Once the films have been grouped in batches, the individual films within the batch are spliced together into batch rolls 8 and twinchecked ready for processing by processor 10. Twinchecking is the process by which a unique number is associated with each film and order envelope in which the film was received. Although the film and order envelope are separated during the photofinishing process, twinchecking enables them to be rematched at the end of the process. An identification card is produced that identifies each particular batch roll 8. The batch rolls 8 may then be notched. Notching is the process of identifying the presence of an image on a film and making a small mark e.g. a punched hole or notch, at an edge of the film. This enables a scanner or printer to recognise and position an image on the film in the scanning or exposing area of a scanner or printer.

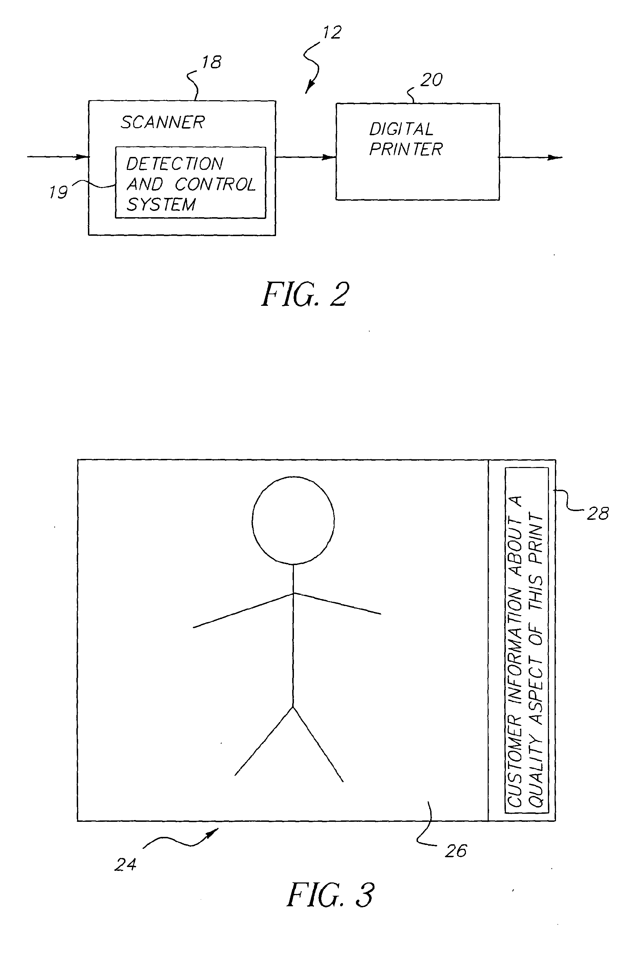

After processing by processor 10, the batch roll 8 of film is transferred to a printing system 12 for printing of the photographs on photographic paper prior to processing of the paper. The printing system 12 is described below with reference to Figure 2. A roll of paper 14 onto which has been exposed the photographs corresponding to each of the images on a corresponding batch roll 8 of film is processed for each batch roll 8. The roll of processed paper 14 is transferred to finishing stations 16 for preparation e.g. cutting and assembly of the customer product. The preparation and assembly stage of the customer product involves the insertion of the photographs into an envelope for return to the customer.

This stage has conventionally also involved the checking of photographs for noticeable quality features or defects effecting individual photographs. For example, if an operator notices that a particular print is too dark, a sticker alerting the customer to the fact that an error was made during exposure of the image onto the film is manually applied to the print. Alternatively, a leaflet alerting the customer to the error may be manually inserted into the envelope. As will be explained below, in accordance with the present invention, information relating to quality features or defects effecting individual photographs is provided to the printing system 12 to enable the automatic provision of an indicator to the customer, thereby rendering the manual application of stickers or insertion of leaflets, unnecessary. This provides a saving in both time and cost.

Usually, the automatic provision of the indicator comprises printing of the indicator in-line with the photographs. In an alternative example an adhesive label having information printed thereon may be adhered to the relevant photograph by an automated synchronised label application system. The label application system is synchronised such that labels are affixed to the relevant photograph in the finishing station 16.

Figure 2 shows an example of a printing system 12 suitable for use in a photographic processing system according to the present invention. An example of a printing system 12 suitable for use in the present invention is the Kodak I. Lab System Gen.2. In the present invention, a computer (not shown) controls the printing system 12 and may be used to control the processing of the film and paper. A computer program, optionally stored in the computer may be used to control the printing system 12 and also the entire photoprocessing system. The computer program may also be stored on any suitable form of computer readable medium such as amongst others CD-ROM or a floppy disk.

The printing system comprises a scanner 18 for digitising an analogue image from a processed film. The analogue image is captured in digital form by the scanner 18 and is provided to a digital printer 20. The scanner 18 is provided with a detection and control system 19, which may be implemented by image enhancement software, controlled to assess the image for defects or quality features that affect it and optionally apply some enhancement to the image. If the image was originally captured in digital form for example by a digital camera, no scanning or digitisation may be required. Accordingly, the image may be provided directly to the printing system where it is assessed for defects or quality features before being supplied to the printer 20. The digital file input to the printer 20, may be a file obtained from a digital camera or any other suitable source of digital images.

The detection and control system 19 assesses the overall colour and density of the image and recognizes particular features of the overall image or areas of the image. This may include exposure level of the film, overall colour cast of the film, sharpness of the image, presence of finger in front of the image capture device lens during image capture, flash subject too close and any other errors that arise as a result of incorrect or suboptimal operation of the image capture device. When any quality related features associated with an image are recognised, the detection and control system 19 is configured to generate a request to add additional information to the image to be written by the printer 20. The printer 20 is then controlled to write the image together with the additional information requested by the detection and control system 19. A preferred format of the printed image is described below with reference to Figure 3. It will be appreciated that any suitable sort of printer capable of receiving a digital image file and providing a printed output may be used. As well as photographic printers that write the images onto photosensistive paper for subsequent processing, examples include inkjet printers and laser printers for printing directly onto a receiver surface and thermal printing systems.

There are many different examples of the additional information that could be written with the image by the printer 20. For example, the information could be a general piece of advice directed to the customer to inform him of how the quality feature might be avoided in future. For example if the print is underexposed, a statement such as "image underexposed", or "film used was too fast for exposure conditions" 2 might be printed adjacent to the image. Alternatively, it is possible that automatic correction could be applied to the image such that the quality feature is not noticed by the customer. In this case, a statement such as "This image has been corrected to compensate for under exposure" might be printed adjacent to the image.

In one example, to demonstrate to a customer how effective the image enhancement has been, an additional corrected photograph could be printed adjacent to the original with the quality feature. A statement relating to the difference(s) between the two could then be printed to alert a customer as to the benefits of the image enhancement. If it is detected by the detection and control system 19 that a whole film has been affected by the same quality feature, rather than print a notification with each image a single notification could be printed at the beginning alerting the customer to the fact that the whole film has been subject to the same error during exposure e.g. a statement such "All images on this film have been over exposed - Please check film/camera settings."

Figure 3 shows a schematic representation of a photographic print according to the present invention. The print 24 includes an image region 26 having the dimensions of a conventional photographic print e.g. 4" x 6", 5" x 7" etc. Adjacent to the image region 26 is a data region 28 in which is printed an indicator relating to the one or more quality features identified in relation to the particular image i.e. information for the customer relating to a quality feature of the print. The customer of course has the option of removing the data region 28 so that the suitably sized image region 26 remains for keeping as the photograph. The border between the image region 26 and the data region 28 may be scored or treated in some other suitable manner as part of the photofinishing process to enable easy separation of the two by a customer.

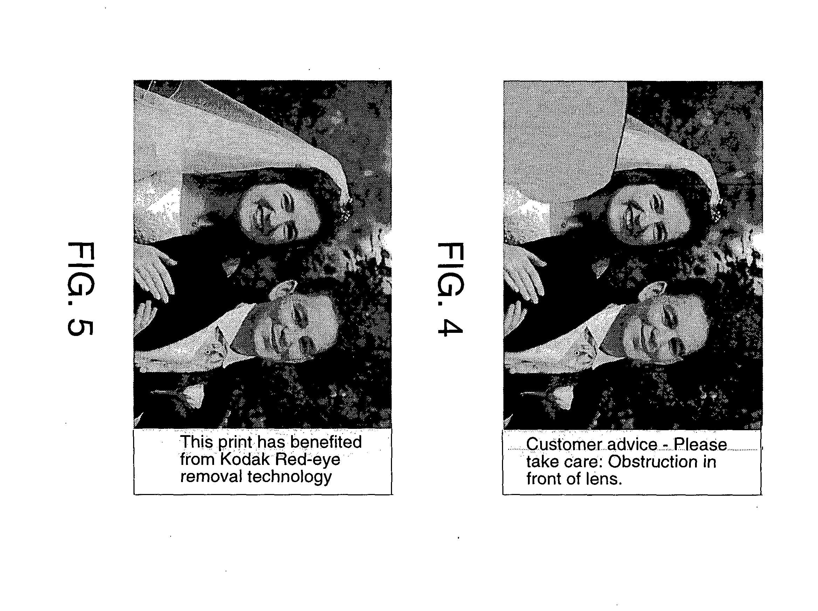

Figures 4 and 5 show examples of photographic prints according to the present invention. In the example shown in Figure 4, during capture of the image i.e. when the photograph was taken, an obstruction obscured the camera lens. This has created an undesirable region of the photograph. The message to the customer alerts them to the cause of the undesirable region of the photograph so that in future the customer will take care to ensure that such obstructions do not occur. In the example shown in Figure 5, the image has been enhanced by the removal of red-eye. The message to the customer alerts them to this fact.

One aspect of the present invention relates to a photographic processing system suitable for creating photographs as described above. The processing system includes a photographic processor having a number of processing stages. For example, typically the processing system might include a developing stage to develop an exposed film, a fixing stage to fix the developed film and a wash and dry stage to wash and dry the developed and fixed film. Once the film has been washed and dried it is transferred to a printing system as described above with reference to Figure 2. The printing system is integral with the processing stages. Accordingly, exposed films are provided as an input to the processing system and printed photographs according to the present invention are obtained as an output.

As explained above, the invention enables quality features to be identified automatically and pointed out to a customer (and optionally automatically corrected) so that added value is provided to the customer.

## Claims

1. A method of processing customer image orders, comprising the steps of:
identifying one or more quality features of one or more digital images;
printing said one or more digital images thereby creating output format prints; and,
automatically providing an indicator relating to said one or more quality features with said output format prints.

2. A method according to claim 1, further comprising, prior to the step of identifying one or more quality features of one or more digital images, the step of digitally scanning a processed film having one or more images captured thereon, to create the one or more digital images.

3. A method according to claim 1, in which the indicator is automatically printed with the output format prints to notify a customer as to the likely cause of the one or more quality features.

4. A method according to claim 3, in which the indicator is printed adjacent to the image to which it relates.

5. A method according to claim 1, in which on identification of said one or more quality features of said one or more digital images, adjustment of said feature is automatically applied to the one or more digital images and in which the indicator is a printed statement to notify a customer that adjustment has occurred.

6. A method according to claim 1, in which the output format prints are printed on photographic material.

7. A method according to claim 6, in which the output format prints are photographs printed on light sensitive photographic paper.

8. A method according to claim 1, in which the output format prints are printed using inkjet printing.

9. A method according to claim 6, in which the photographic material is a roll of photographic paper and in which images from a common film are printed on the photographic paper, the indicator being printed on a region of said photographic paper corresponding to the image to which it relates.

10. A method according to claim 2, in which if it is detected that a quality feature is common to more than one of the images derived from the same film, a single indicator is printed to alert a customer to the fact that the quality feature is present in more than one of the images.

11. A method according to claim 5, in which as well as printing an image with the feature adjusted, the image is also printed without the feature adjusted together with a statement to alert a user to the difference in quality between the adjusted image and the non-adjusted image.

12. A photographic print, comprising an image region having an image printed thereon and a data region, the data region being arranged adjacent to the image region and containing data relating to one or more quality features of the image.

13. A printing system for a photographic processing system, the printing system comprising a data source adapted to provide data relating to an image to be printed and data relating to an indicator of a quality feature of the image to be printed; and,
a printer to receive the data relating to the image and the indicator and for printing a photographic print according to claim 12.

14. A printing system according to claim 13, in which the data source comprises a scanner for scanning processed film and creating a digital image file for providing to the printer.

15. A printing system according to claim 14, in which the scanner includes a detection and control system for detecting one or more quality features of images on film that it scans and generating a control signal for coupling to the printer, to cause the printer to print the image and the indicator of the quality feature of the image.

16. A printing system according to claim 15, in which the detection and control system is implemented by image enhancement software, optionally stored on a computer readable medium.

17. A photographic processing system, comprising:
a processor for receiving and processing exposed photographic film; and,
a printing system, the printing system comprising a scanner to scan the processed film, a detection and control system for detecting one or more quality features of images on the film and a printer to print images from said film, the printer being controlled to print an indication of the one or more quality features.

18. A computer program for controlling the operation of a photographic processing system comprising a processor for receiving and processing exposed photographic film and a printing system for printing images from said film, which when run on a computer associated with said photographic processing system causes said printer to detect any quality features of images on the film and print an indication of the one or more detected quality features adjacent to the corresponding printed images from said film.
